# EUROPEAN PATENT APPLICATION

(11) **EP 4 838 050 A1**
(43) Date of publication of application: **11.11.2026**
(21) Application number: 26162286.4
(22) Date of filing: 04.03.2026
(51) Int. Cl.: F01D 5/18, F01D 9/04, F01D 25/24

(54) **GAS TURBINE FOR CONTROLLING THERMAL EXPANSION OF VANE CARRIER**

(30) Priority: 05.03.2025 KR 20250028056
(71) Applicant: Doosan Enerbility Co., Ltd., Seongsan-gu Changwon-si, Gyeongsangnam-do 51711 (KR)
(72) Inventor: HAN, Dowon, 47767 Busan (KR); JEON, Jooheon, 51632 Changwon-si, Gyeongsangnam-do (KR); LEE, Seung Yeob, 08708 Seoul (KR)
(74) Representative: BCKIP Part mbB

(57) **Abstract**

A gas turbine for controlling thermal expansion of a vane carrier includes a vane carrier, a turbine casing that supports the vane carrier, a flow cavity, in which cooling air flows between the vane carrier and the turbine casing, and a plurality of cooling air guide parts installed in the flow cavity, and that guides the cooling air such that the cooling air circulates along the flow cavity.

## Description

This application claims the benefit of priority to Korean Patent Application No. 10-2025-0028056, filed in the Korean Intellectual Property Office on March 05, 2025.

### TECHNICAL FIELD

The present disclosure relates to a gas turbine for controlling thermal expansion of a vane carrier, and more particularly, to a turbine casing for a gas turbine that is capable of preventing non-uniform thermal expansion of a turbine vane carrier.

### BACKGROUND

In general, a gas turbine includes a compressor, a combustor, and a turbine. The compressor suctions exterior air, compresses it, and then delivers it to the chamber. The air compressed by the compressor becomes a high pressure and a high temperature. The combustor burns a mixture of fuel and the compressed air introduced from the compressor. The combustion gas generated through combustion is discharged to the turbine. The turbine blade in an interior of the turbine is rotated by the combustion gas, and thus, power is generated. The generated power is used in various fields, such as power generation and driving of mechanical devices.

The gas turbine is provided with a turbine casing through which combustion gas that is supplied from the combustor passes, and a turbine vane carrier that defines an air chamber between the turbine vane carrier and the turbine casing and supports a turbine vane in the turbine casing.

Air that is introduced into the compressor undergoes an adiabatic compression process in the compressor, so that a temperature of the air is lowered, and the cooling air having the lowered temperature is supplied to a turbine vane and a ring segment.

Conventionally, when startup of the gas turbine is stopped, air inside the turbine casing in which the combustor is installed may generate a temperature difference between an upper side and a lower side of the turbine casing due to an air density difference, and as a result, not only deformation but also damage of the turbine casing may occur.

Accordingly, to solve such a problem, a cooling device that includes cooling air supply nozzles that supply cooling air generated by a cooling fan into the turbine casing is provided at upper and lower sides of the casing.

However, conventionally, as a distance from a point at which the cooling air supply nozzle is located increases, non-uniform flow occurs, and as a result, the cooling air collides with an inner surface of the vane carrier of the turbine, so that thermal equilibrium is not achieved because of a local temperature change of the vane carrier, and a non-uniform thermal expansion section inevitably occurs due to a difference in thermal expansion.

Furthermore, a local temperature change of the vane carrier may cause unintended deformation of the vane carrier. When the engine is started during a period in which such deformation of the vane carrier occurs, the deformed shape of the vane carrier acts as a factor that increases a rubbing risk of the turbine blades due to interference between turbine blade tips and the vane carrier.

### SUMMARY

The present disclosure has been made to solve the above-mentioned problems occurring in the prior art while advantages achieved by the prior art are maintained intact.

An aspect of the present disclosure provides a gas turbine for controlling thermal expansion of a vane carrier that includes a cooling air guide part between a turbine vane carrier and a turbine casing to improve flow of cooling air and to prevent non-uniform thermal expansion caused by a local temperature change of the vane carrier.

Objects of the present disclosure are not limited to the above-mentioned object, and other objects and advantages of the present disclosure that is not mentioned will be understood from the following description, and it will be apparently understood from an embodiment of the present disclosure. In addition, it will be easily understood that the objects and advantages of the present disclosure are realized by means and combinations described in the appended claims.

The technical problems to be solved by the present disclosure are not limited to the aforementioned problems, and any other technical problems not mentioned herein will be clearly understood from the following description by those skilled in the art to which the present disclosure pertains.

A gas turbine for controlling thermal expansion of a vane carrier includes a vane carrier, a turbine casing that supports the vane carrier, a flow cavity, in which cooling air flows between the vane carrier and the turbine casing, and a plurality of cooling air guide parts installed in the flow cavity, and that guides the cooling air such that the cooling air circulates along the flow cavity.

According to an embodiment of the present disclosure, a plurality of cooling air supply nozzles that supplies the cooling air to the cooling air guide parts may be included in the turbine casing.

According to an embodiment of the present disclosure, the cooling supply nozzles may be disposed in a direction facing a central axis of the turbine casing.

According to an embodiment of the present disclosure, the cooling air guide parts may be curved in a direction crossing an injection direction of the cooling air to form a flow pattern, in which the cooling air circulates along a lengthwise direction of the cooling air guide parts.

According to an embodiment of the present disclosure, the cooling air guide parts may be formed in an arc shape on a concentric circle between the turbine casing and the vane carrier.

According to an embodiment of the present disclosure, the vane carrier may include an upper vane carrier and a lower vane carrier, the turbine casing may include an upper turbine casing and a lower turbine casing, any one of the cooling air guide parts may be disposed between the upper vane carrier and the upper turbine casing, and another one of the cooling air guide parts may be disposed between the lower vane carrier and the lower turbine casing.

According to an embodiment of the present disclosure, the cooling air guide parts may be fixed to a lower portion of the turbine casing and extend along a lengthwise direction of the turbine casing.

According to an embodiment of the present disclosure, the cooling air guide parts may be formed in a perforated plate shape having a plurality of through-holes.

According to an embodiment of the present disclosure, the cooling air guide parts may be formed of a flexible shock-absorbing material.

### BRIEF DESCRIPTION OF THE DRAWINGS

The above and other objects, features and advantages of the present disclosure will be more apparent from the following detailed description taken in conjunction with the accompanying drawings:
FIG. 1 is a cross-sectional view illustrating a gas turbine according to an embodiment of the present disclosure;
FIG. 2 is a cross-sectional view illustrating a turbine of the gas turbine according to an embodiment of the present disclosure;
FIG. 3 is a cross-sectional view taken along line A-A of FIG. 2; and
FIG. 4 is an enlarged view of portion B of FIG. 2.

### DETAILED DESCRIPTION

Hereinafter, some embodiments of the present disclosure will be described in detail with reference to the accompanying drawings. In adding reference numerals to the components of the drawings, it should be noted that the same components have the same numerals as possible even when they are illustrated on different drawings. In describing embodiments of the present disclosure, detailed descriptions associated with well-known functions or configurations will be omitted if they may make subject matters of the present disclosure unnecessarily obscure.

Furthermore, in describing components of embodiments of the present disclosure, the terms first, second, A, B, (a), (b), and the like may be used herein. These terms are only used to distinguish one component from another component, but do not limit the corresponding components irrespective of the nature, order, or priority of the corresponding components. When it is described that a certain component is "connected to", "coupled to" or "electrically connected to" a second component, it should be understood that the component may be directly connected or electrically connected to the second component, but a third component may be "connected", "coupled" or "electrically connected" between the components.

Hereinafter, embodiments of the present disclosure will be described in detail with reference to accompanying drawings.

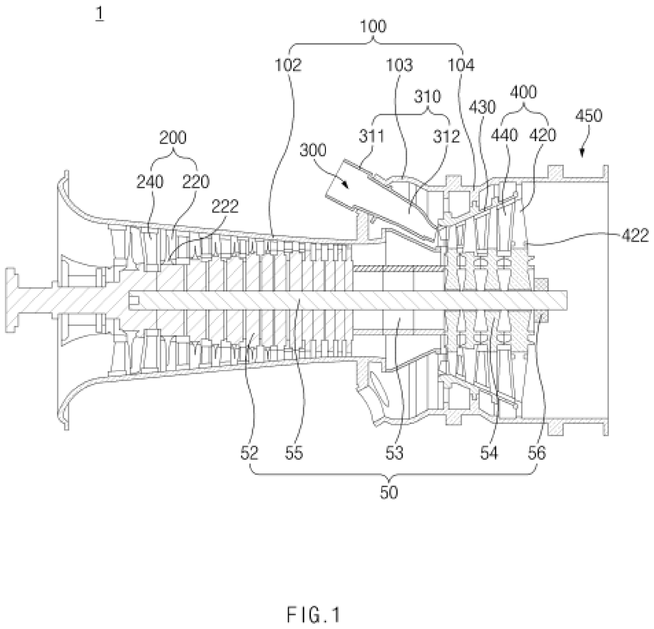

FIG. 1 is a cross-sectional view illustrating a gas turbine 1 according to an embodiment of the present disclosure.

Referring to FIG. 1, the gas turbine 1 includes a casing 100, a compressor 200, a combustor 300, and a turbine 400.

The casing 100 may be a component that is provided on an outside of the compressor 200, the combustor 300, and the turbine 400 to protect them. The compressor 200 may serve to suction air, compress the air at a high pressure, and supply the compressed air to the combustor 300. The combustor 300 may serve to mix the compressed air and fuel and combust the compressed air and the fuel. The combustor 300 may supply high-pressure combustion gas generated by the combustion to the turbine 400. The turbine 400 may produce electric power while rotating a plurality of turbine blades 420 by using the combustion gas supplied from the combustor 300.

### [Casing]

The casing 100 may include a compressor casing 102, in which the compressor 200 is accommodated, a combustor casing 103, in which the combustor 300 is accommodated, and a turbine casing 104, in which the turbine 400 is accommodated. The compressor casing 102, the combustor casing 103, and the turbine casing 104 may be sequentially arranged from an upstream side to a downstream side in a fluid flow direction.

A rotor 50 may be rotatably provided in an interior of the casing 100, a power generator (not illustrated) may interwork with the rotor 50 for power generation, and a diffuser (not illustrated) that discharges the combustion gas that has passed through the turbine 400 may be provided on a downstream side of the casing 100. The diffuser may be disposed in an exhaust chamber 450.

The rotor 50 may include a compressor rotor disk 52, a torque tube 53, and a turbine rotor disk 54. The compressor rotor disk 52 may be accommodated in the compressor casing 102. The turbine rotor disk 54 may be accommodated in the turbine casing 104. A torque tube 53 may be accommodated in the combustor casing 103. The torque tube 53 may connect the compressor rotor disk 52 and the turbine rotor disk 54. The compressor rotor disk 52, the torque tube 53, and the turbine rotor disk 54 may be firmly fastened to each other by a tie rod 55 and a fixing nut 56.

A plurality of compressor rotor disks 52 may be formed. As an example, fourteen compressor rotor disks 52 are provided. The plurality of compressor rotor disks 52 may be arranged along an axial direction of the rotor 50. That is, the compressor rotor disks 52 may be formed in multiple stages. The turbine rotor disk 54 may be formed in a substantially disk shape. A disk coupling slot (not illustrated) that is coupled to the turbine blades 420 may be formed on an outer circumferential surface of the turbine rotor disk 54.

The torque tube 53 is a torque transmitting means that transmits a rotational force of the turbine rotor disk 54 to the compressor rotor disk 52. One end of the torque tube 53 may be coupled to the compressor rotor disk 52 that is located at a most downstream end in a flow direction of air, among the plurality of compressor rotor disks 52. An opposite end of the torque tube 53 may be coupled to the turbine rotor disk 54 that is located at a most upstream end in a combustion gas flow direction, among the plurality of turbine rotor disks 54. A projection (not illustrated) may be formed at each of the one end and the opposite end of the torque tube 53, a groove that is enmeshed with the projection may be formed in each of the compressor rotor disk 52 and the turbine rotor disk 54, and relative rotation of the torque tube 53 with respect to the compressor rotor disk 52 and the turbine rotor disk 54 may be prevented.

Furthermore, the torque tube 53 may be formed in a hollow cylindrical shape such that air supplied from the compressor 200 may flow to the turbine 400 through the torque tube 53. The torque tube 53 may be formed to be strong against deformation and torsion because of characteristics of the gas turbine 1 that is continuously operated for a long period of time, and may be formed to be easily assembled and disassembled for easy maintenance.

The tie rod 55 may be formed to pass through the plurality of compressor rotor disks 52, the torque tube 53, and the plurality of turbine rotor disks 54. One end of the tie rod 55 may be fastened in the compressor rotor disk 52 that is located at a most upstream end in a flow direction of air, among the plurality of compressor rotor disks 52. An opposite end of the tie rod 55 may protrude to an opposite side to the compressor 200 with respect to the turbine rotor disk 54 that is located at a most downstream end in a flow direction of combustion gas, among the plurality of turbine rotor disks 54. The opposite end of the tie rod 55 may be fastened to the fixing nut 56.

The fixing nut 56 may press the turbine rotor disk 54 that is located at a most downstream end toward the compressor 200. As a distance between the compressor rotor disk 52 that is located at a most upstream end and the turbine rotor disk 54 that is located at a most downstream end is decreased by the fixing nut 56, the plurality of compressor rotor disks 52, the torque tube 53, and the plurality of turbine rotor disks 54 may be compressed in an axial direction of the rotor 50. Accordingly, axial movement and relative rotation of the plurality of compressor rotor disks 52, the torque tube 53, and the plurality of turbine rotor disks 54 may be prevented.

Meanwhile, according to an embodiment of the present disclosure, one tie rod 55 is formed to pass through a central portion of the plurality of compressor rotor disks 52, the torque tube 53, and the plurality of turbine rotor disks 54, but the present disclosure is not limited thereto. That is, a separate tie rod 55 may be provided in each of the compressor 200 side and the turbine 400 side, and a plurality of tie rods 55 may be disposed radially along a circumferential direction, and a combination thereof may be possible. The rotor 50 according to this configuration may have opposite ends that are supported by bearings such that the opposite ends are rotatable, and one end that is connected to a drive shaft of a power generator.

### [Compressor]

The compressor 200 may include compressor blades 220 that are rotated together with the rotor 50, and compressor vanes 240 that are fixedly installed in the casing 100 to align a flow of air that is introduced into the compressor blades 220.

A plurality of compressor blades 220 may be formed, and the plurality of compressor blades 220 may be formed in multiple stages along an axial direction of the rotor 50, and the plurality of compressor blades 220 may be formed radially along a rotational direction of the rotor 50 at each stage. A root member 222 of the compressor blade 220 may be coupled to a compressor blade coupling slot (not illustrated) of the compressor rotor disk 52, and the root member 222 may be formed in a fir-tree shape to prevent the compressor blade 220 from being separated from the compressor blade coupling slot in a radial direction of rotation of the rotor 50. In this case, the compressor blade coupling slot may be formed in a fir-tree shape to correspond to the root member 222 of the compressor blade 220.

According to an embodiment of the present disclosure, the root member 222 of the compressor blade 220 and the compressor blade coupling slot are formed in a fir-tree shape, but the present disclosure is not limited thereto, and may be formed in a dove-tail shape.

The compressor rotor disk 52 and the compressor blade 220 are typically coupled in a tangential type or an axial type, and in this embodiment, the root member 222 of the compressor blade 220 is formed in a so-called axial type, in which the root member 222 is inserted into the compressor blade coupling slot along an axial direction of the rotor 50 as described above. Accordingly, according to this embodiment, a plurality of compressor blade coupling slots may be formed, and the plurality of compressor blade coupling slots may be disposed radially along a circumferential direction of the compressor rotor disk 52.

A plurality of compressor vanes 240 may be formed, and the plurality of compressor vanes 240 may be formed in multiple stages along an axial direction of the rotor 50. Here, the compressor vanes 240 and the compressor blades 220 may be alternately disposed along a flow direction of air. Furthermore, the plurality of compressor vanes 240 may be formed radially along a rotational direction of the rotor 50 at each stage.

### [Combustor]

The combustor 300 may mix and combust air that is introduced from the compressor 200 with fuel to generate combustion gas having high energy. In this case, the combustion gas may be in a high-temperature and high-pressure state.

A plurality of combustors 300 may be arranged in the casing 100 that is formed in a cell form, and each combustor 300 includes a burner that includes a fuel injection nozzle and the like, a combustor liner that defines a combustion chamber 300, and a transition piece (not illustrated) that acts as a connection part of the combustor 300 and the turbine 400.

Specifically, the liner may provide a combustion space, in which fuel that is injected by a fuel injection nozzle is mixed with compressed air of the compressor 200 and is combusted. Such a liner may include a flame tube that provides a combustion space, in which fuel mixed with air is combusted, and an annular liner passage that forms an annular space while surrounding the flame tube.

Furthermore, a fuel injection nozzle may be coupled to a front end of the liner, and an igniter may be coupled to a sidewall thereof.

Meanwhile, a transition piece is connected to a rear end of the liner to send the combustion gas to the turbine 400. Like the liner, the transition piece may have an outer wall part that is cooled by compressed air supplied from the compressor 200 to prevent damage caused by a high temperature of the combustion gas.

Meanwhile, high-temperature and high-pressure combustion gas that is discharged from the combustor 300 is supplied to the turbine 400. The high-temperature and high-pressure combustion gas that is supplied to the turbine 400 is expanded while passing through an interior of the turbine 400, and collides with the turbine blades 420 to provide a reaction force, thereby generating rotational torque. The rotational torque obtained as described above is transmitted to the compressor 200 through the torque tube 53, and power that exceeds power required to drive the compressor 200 may be used to drive the power generator and the like.

### [Turbine]

The turbine 400 is basically similar in structure to the compressor 200. That is, the turbine 400 is also provided with a turbine rotor that is similar to the compressor rotor of the compressor 200. Accordingly, the turbine rotor also includes the turbine rotor disk 54 and a plurality of turbine blades 420 that are disposed radially from the turbine rotor disk 54.

A turbine vane 440 is also provided between the turbine blades 420, the turbine vane 440 being fixed to the turbine casing 104 through a turbine vane carrier 430 (hereinafter, referred to as a "vane carrier"). The turbine vane 440 may guide a flow direction of combustion gas that has passed through the turbine blades 420. The vane carrier 430 employs at least one turbine vane 440 and is connected to the turbine casing 104.

The vane carrier 430 and a plurality of turbine vanes 440 that are coupled thereto are disposed in multiple stages along an axial direction of the turbine casing 104. The turbine casing 104 includes an upper turbine casing 104a and a lower turbine casing 104b that are divided upward and downward with respect to a horizontal plane that passes through a center of the turbine casing 104. The vane carrier 430 includes an upper vane carrier 431 and a lower vane carrier 432 that are installed in the upper turbine casing 104a and the lower turbine casing 104b, respectively. Of course, the plurality of turbine vanes 440 also includes a plurality of upper turbine vanes that are installed in the upper vane carrier 431 and a plurality of lower turbine vanes that are installed in the lower vane carrier 432.

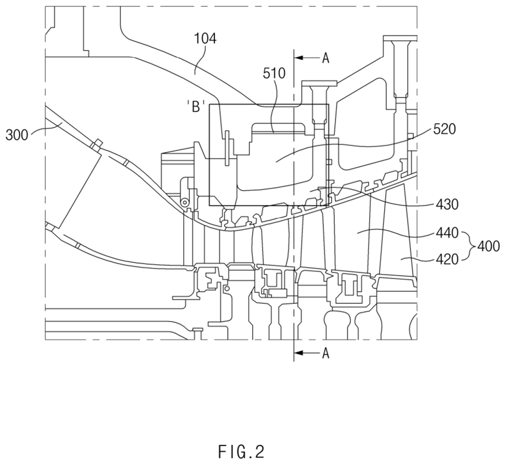

FIG. 2 is a cross-sectional view illustrating the turbine 400 of the gas turbine 1 according to an embodiment of the present disclosure.

The turbine 400 of the gas turbine 1 includes the vane carrier 430 that includes the upper vane carrier 431 and the lower vane carrier 432 that are located at a rear end of the combustor 300 of the gas turbine 1.

### [Vane Carrier and Turbine Casing]

The vane carrier 430 may be formed in a hollow cylindrical shape, and the turbine vanes 440 may be located radially inward therefrom along a circumference thereof. Furthermore, a coupled state of the upper vane carrier 431 and the lower vane carrier 432 may be maintained by means of a coupling part (not illustrated) that connects them.

Because the vane carrier 430 may support the plurality of turbine vanes 440 that are provided in an interior thereof, it may cover the plurality of turbine vanes 440 that are disposed along a circumferential direction of the vane carrier 430 from an outside.

The upper vane carrier 431 and the lower vane carrier 432 of the vane carrier 430 may be fastened in a state in which the upper vane carrier 431 and the lower vane carrier 432 are closely attached to each other by the coupling part, so that a structure may be simple and assembly and disassembly may be easy.

Furthermore, because the vane carrier 430 may include the upper vane carrier 431 and the lower vane carrier 432, replacement cost may be reduced through partial replacement when any one of the upper vane carrier 431 and the lower vane carrier 432 is damaged, compared to a vane carrier 430 having a single structure.

When startup of the gas turbine 1 is stopped, air inside the turbine casing 104 may generate a temperature difference between an upper side and a lower side of the turbine casing 104 due to an air density difference. Accordingly, a cooling device that includes cooling air supply nozzles 500 that supply cooling air generated by a cooling fan (not illustrated) into the turbine casing 104 may be installed at upper and lower sides of the turbine casing 104. However, as a distance from a point at which the cooling air supply nozzle 500 is located increases, non-uniform flow may occur, and the cooling air may collide with an inner surface of the vane carrier 430, so that the vane carrier 430 may thermally expand non-uniformly because of a local temperature change of the vane carrier 430. Furthermore, the present disclosure solves a problem in which, during startup of the gas turbine, a rubbing risk of the turbine blades 420 increases because of non-uniform thermal expansion of the vane carrier 430, and proposes a gas turbine for controlling thermal expansion of a vane carrier that may prevent direct collision of cooling air with the vane carrier 430 to alleviate non-uniform thermal expansion.

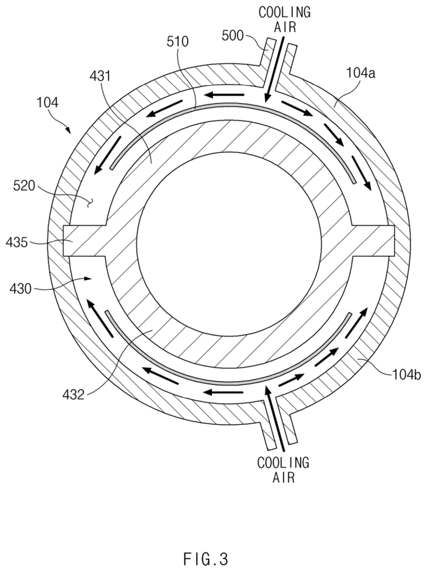

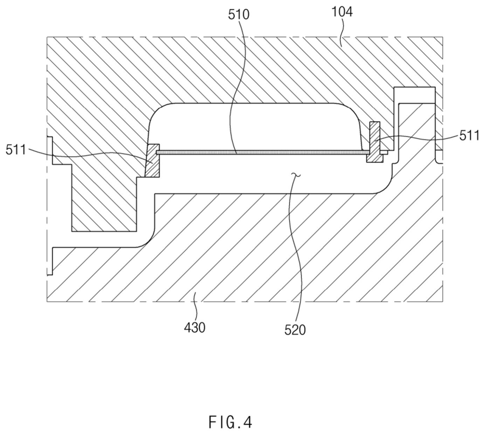

FIG. 3 is a cross-sectional view taken along line A-A of FIG. 2, and FIG. 4 is an enlarged view of portion B of FIG. 2.

Referring to FIG. 3, the turbine casing 104 may be formed in a substantially hollow cylindrical shape and may define an inner cavity in an interior thereof. A cylindrical vane carrier 430 that shares a central axis with the turbine casing 104 is formed in the inner cavity of the turbine casing 104. The vane carrier 430 may be fixed to an inner surface of the turbine casing 104 by a fixing part 435.

The cooling device includes a blower fan that is driven to introduce outside air to cool the inner cavity of the turbine casing 104, and a plurality of cooling air supply nozzles 500 that supply air from the blower fan into the turbine casing 104.

The cooling air supply nozzle 500 may be formed in a plurality or may be formed as a single body. According to an embodiment of the present disclosure, the present disclosure is not limited thereto, and a number of the cooling air supply nozzles 500 may vary depending on cooling performance and an installation position of the cooling air supply nozzles 500.

The cooling air supply nozzle 500 may be disposed at an arbitrary position of the upper turbine casing 104a and the lower turbine casing 104b. However, it is important that the cooling air supply nozzle 500 is disposed in a direction toward a central axis of the turbine casing 104.

A position of the cooling air supply nozzle 500 may be set such that cooling air that is injected from the cooling air supply nozzle 500 collides with inner components that are provided in the turbine casing 104.

A flow cavity 520, through which cooling air supplied from the cooling air supply nozzle 500 flows, is provided between the turbine casing 104 and the vane carrier 430. A temperature of cooling air that flows through the flow cavity 520 may be lower than a temperature of outside air.

A stagnation section in which flow of cooling air is stagnated and a collision section in which cooling air collides with inner components of the turbine casing 104 may be formed in the vane carrier 430, depending on a position of the cooling air supply nozzle 500 that is formed in the turbine casing 104. To prevent non-uniform thermal expansion that is generated in the vane carrier 430 by such a flow pattern of cooling air, a plurality of cooling air guide parts 510 that prevent collision of cooling air with the vane carrier 430 and guide the cooling air such that the cooling air circulates along the flow cavity 520 are provided in the flow cavity 520 between the turbine casing 104 and the vane carrier 430.

### [Cooling Air Guide Part]

A cooling air guide part 510 may be fixed to a lower portion of the turbine casing 104 and may be formed along a lengthwise direction of the turbine casing 104.

The cooling air guide part 510 may be installed in the flow cavity 520 between the turbine casing 104 and the vane carrier 430.

The cooling air guide part 510 is formed to be curved in a direction crossing an injection direction of cooling air such that cooling air that is injected from the cooling air supply nozzle 500 forms a flow pattern in which the cooling air circulates along a lengthwise direction of the cooling air guide part 510. As an example, the cooling air guide part 510 may be formed in an arc shape on a concentric circle between the turbine casing 104 and the vane carrier 430.

An injection direction of cooling air that is supplied from the cooling air supply nozzle 500 is formed toward the cooling air guide part 510. Accordingly, one of the cooling air guide parts 510 may be installed between the upper turbine casing 104a and the upper vane carrier 431, and another one of the cooling air guide parts 510 may be installed between the lower turbine casing 104b and the lower vane carrier 432.

Cooling air that is supplied through the cooling air supply nozzle 500 may collide with the cooling air guide part 510, and then a direction thereof may be converted so that it may be dispersed in various directions in the flow cavity 520 while circulating along a lengthwise direction of the cooling air guide part 510. In this case, because the cooling air is not allowed to collide with the vane carrier 430 in the turbine casing 104, local temperature change of the vane carrier 430 may be prevented, so that non-uniform thermal expansion may be alleviated.

In another embodiment, the cooling air guide part 510 may be formed in a perforated plate shape in which a plurality of through-holes are formed. This is to allow the cooling air to be dispersed in various directions in the flow cavity 520 after colliding with the cooling air guide part 510 while passing through the through-holes, so that an interior of the turbine casing 104 may be easily cooled through a high heat transfer effect of the cooling air. In this case, the through-holes may be formed over an entire surface of the perforated plate, but the present disclosure is not limited thereto.

When the cooling air guide part 510 is formed as a perforated plate as described above, because the cooling air is uniformly and easily dispersed in the flow cavity 520, a temperature deviation in the flow cavity 520 may be rapidly reduced, so that the cooling air may have a thermally uniform flow pattern.

Referring to FIG. 4, the cooling air guide part 510 is installed between the turbine casing 104 and the vane carrier 430.

The cooling air guide part 510 may be fixed by a fixing part 511 between extension parts that extend from the turbine casing 104 toward the vane carrier 430. As an example, the cooling air guide part 510 may have a coupling hole formed at one side that is to be fixed, one side being fixed in a manner in which a coupling member is fastened to the coupling hole, and may have an insertion groove formed at an opposite side, the opposite side being fixed in a manner in which an outer peripheral portion of the cooling air guide part 510 is inserted into the insertion groove. However, the present disclosure is not limited thereto, and the cooling air guide part 510 may be fixed to the turbine casing 104 in various manners.

As described above, the cooling air guide part 510 may have a substantially thin plate shape and may be fixed to be flexible. Accordingly, when cooling air that is injected from the cooling air supply nozzle 500 collides at a high speed, a collision load of the cooling air may be reduced.

As described above, the cooling air guide part 510 may be formed of a flexible shock-absorbing material to reduce a collision load of the cooling air.

According to the gas turbine for controlling thermal expansion of a vane carrier according to the present disclosure having the configuration as described above, the cooling air guide part is provided between the turbine casing and the vane carrier so as to guide cooling air to be dispersed in the flow cavity instead of allowing direct collision of cooling air with the vane carrier after the cooling air is supplied into the flow cavity between the turbine casing and the vane carrier, thereby preventing a local temperature change of the vane carrier and alleviating non-uniform thermal expansion.

In particular, when the cooling air guide part is formed as the perforated plate, the cooling air that is introduced into the turbine casing may be uniformly dispersed in various directions in the flow cavity while passing through the through-holes, so that a temperature deviation in the flow cavity may be rapidly reduced and the cooling air may have a thermally uniform flow pattern.

The above-mentioned description of the present disclosure is intended to be illustrative, and it should be understood by those skilled in the art that the present disclosure may be embodied in other specific forms without departing from the spirit or essential characteristics thereof. Therefore, the above-described embodiments are examples in all aspects, and should be construed not to be restrictive. The scope of the present disclosure is defined by claims to be described below, and it should be interpreted that the scopes or claims of the present disclosure and all modifications or changed forms derived from the equivalent concept are included in the scopes of the present disclosure.

## Claims

1. A gas turbine for controlling thermal expansion of a vane carrier, the gas turbine comprising:
a vane carrier;
a turbine casing configured to support the vane carrier;
a flow cavity, in which cooling air flows between the vane carrier and the turbine casing; and
a plurality of cooling air guide parts installed in the flow cavity, and configured to guide the cooling air such that the cooling air circulates along the flow cavity.

2. The gas turbine of claim 1, wherein a plurality of cooling air supply nozzles configured to supply the cooling air to the cooling air guide parts are included in the turbine casing.

3. The gas turbine of claim 2, wherein the cooling supply nozzles are disposed in a direction facing a central axis of the turbine casing.

4. The gas turbine of claim 1, wherein the cooling air guide parts are curved in a direction crossing an injection direction of the cooling air to form a flow pattern, in which the cooling air circulates along a lengthwise direction of the cooling air guide parts.

5. The gas turbine of claim 4, wherein the cooling air guide parts are formed in an arc shape on a concentric circle between the turbine casing and the vane carrier.

6. The gas turbine of claim 5, wherein the vane carrier includes an upper vane carrier and a lower vane carrier,
wherein the turbine casing includes an upper turbine casing and a lower turbine casing,
wherein any one of the cooling air guide parts is disposed between the upper vane carrier and the upper turbine casing, and
wherein another one of the cooling air guide parts is disposed between the lower vane carrier and the lower turbine casing.

7. The gas turbine of claim 6, wherein the cooling air guide parts are fixed to a lower portion of the turbine casing and extend along a lengthwise direction of the turbine casing.

8. The gas turbine of claim 7, wherein the cooling air guide parts are formed in a perforated plate shape having a plurality of through-holes.

9. The gas turbine of claim 8, wherein the cooling air guide parts are formed of a flexible shock-absorbing material.
